# EUROPÄISCHE PATENTSCHRIFT

(11) **EP 1 400 731 B1**
(45) Veröffentlichungstag und Bekanntmachung des Hinweises auf die Patenterteilung: **11.05.2011**
(21) Anmeldenummer: 03016853.8
(22) Anmeldetag: 24.07.2003
(51) Int. Cl.: F16H 61/04

(54) **Vorrichtung zur Synchronisierung eines Doppelkupplungsgetriebes**
Apparatus for synchronizing a double clutch transmission
Appareil de synchronisation d'un boîte de vitesses à double embrayage

(30) Priorität: 18.09.2002 DE 10243278
(43) Veröffentlichungstag der Anmeldung: 24.03.2004
(73) Patentinhaber: Volkswagen Aktiengesellschaft, 38436 Wolfsburg (DE)
(72) Erfinder: Lutz, Wolf-Rüdiger, Dr., 38442 Wolfsburg (DE); Kruse, Georg, 38518 Gifhorn (DE)

(56) Entgegenhaltungen:
- EP-A- 1 028 270
- DE-A1- 19 749 767
- FR-A- 2 805 587
- FR-A- 2 809 784
- JP-A- 60 175 845

## Beschreibung

Die Erfindung betrifft eine Vorrichtung zur Synchronisierung eines Doppelkupplungsgetriebes, insbesondere für ein Kraftfahrzeug, mit einer Bremseinrichtung zur Synchronisierung der Drehzahlen der schaltenden Getriebeteile bei einem Gangwechsel von einem niedrigeren Quellgang in einen höheren Zielgang.

Doppelkupplungsgetriebe für Kraftfahrzeuge sind seit längerem bekannt. Ein Doppelkupplungsgetriebe weist im allgemeinen zwei koaxial angeordnete Getriebeeingangswellen, denen jeweils eine separate Eingangskupplung und eine Gruppe von Gangstufen zugeordnet sind sowie eine Getriebeausgangswelle oder Abtriebswelle auf. Bekannte Doppelkupplungsgetriebe verwenden beispielsweise zwei ölgekühlte Lamellenkupplungen oder Nasskupplungen als Eingangskupplungen. Zumeist umfasst die eine Gruppe die Gangstufen mit ungerader Ordnungszahl einschließlich des Rückwärtsganges, während die andere Gruppe die Gangstufen mit gerader Ordnungszahl umfasst. Prinzipiell weist jede Gangstufe ein drehfest mit einer Welle verbundenes Festrad auf, dass sich in ständigem Eingriff mit einem auf einer anderen Welle drehbar gelagerten Losrad befindet. Bei einem Schaltvorgang wird das Losrad mit seiner es tragenden Welle über eine Gangschaltkupplung verbunden und bei geschlossener Eingangskupplung das Antriebsmoment des Motors auf die Abtriebswelle übertragen. In einem Doppelkupplungsgetriebe besteht ein Schaltvorgang, d.h. ein Wechsel von einem wirksamen Quellgang in einen nächsthöheren oder nächstniedrigeren Zielgang zunächst in einem Einlegen des Zielganges, was z.B. über eine entsprechende Schaltmuffe und die einem Gangrad des Zielganges zugeordnete Gangschaltkupplung erfolgen kann, und in einem anschließenden überschnittenen Öffnen der der Getriebeeingangswelle des Quellganges zugeordneten Eingangskupplung und Schließen der der Getriebeeingangswelle des Zielganges zugeordneten Eingangskupplung. Außerhalb der Schaltvorgänge erfolgt die Kraftübertragung also jeweils sequentiell über eine der beiden Getriebeeingangswellen.

Da bei manueller Betätigung von zwei Eingangskupplungen und der Schaltung der Gänge mit vorübergehend zwei gleichzeitig eingelegten Gängen ein erheblicher mechanischer Aufwand erforderlich wäre, sind Doppelkupplungsgetriebe zumeist automatisiert ausgebildet, d.h. dass sowohl die Betätigung der Eingangskupplungen als auch das Schalten der Gänge über zugeordnete Hilfsantriebe erfolgt, die elektromagnetisch, elektromotorisch, druckmittel-, wie z.B. hydraulisch, oder in anderer Weise betätigbar ausgebildet sein können und über ein Getriebesteuergerät gesteuert werden.

Ein wesentlicher Vorteil des Doppelkupplungsgetriebes gegenüber einem konventionellen Stufenwechselgetriebe liegt in den weitgehend zugkraftunterbrechungsfreien Schaltvorgängen. Hierdurch ist ein besseres Beschleunigungsvermögen im Zugbetrieb und ein besseres Verzögerungsvermögen im Schubbetrieb gegeben. Darüber hinaus ist der Fahrkomfort dadurch verbessert, dass Beschleunigungswechsel und durch eine Überbrückung von Lastspielen zwischen Bauteilen des Antriebsstranges bedingte Schlaggeräusche weitgehend vermieden werden.

Ein komfortabler Gangwechsel ohne Lastschläge erfordert vor dem Einrücken des Zielgangs eine möglichst weitgehende Angleichung der Drehzahl der Getriebeeingangswelle an die aktuelle Drehzahl der Abtriebswelle, bzw. der neuen Zielgangstufe, damit die beteiligten Zahnräder leicht und momentfrei ineinander greifen können. Dazu weißen die Getriebe meist Synchronisierungsvorrichtungen auf. Die Getriebeeingangswelle des Quellgangs wird dazu beispielsweise durch den Einsatz von Synchronisierungsvorrichtungen beim Hochschalten von einer niedrigeren Gangstufe in eine höhere Gangstufe abgebremst und entsprechend beim Rückschalten beschleunigt. Die Beschleunigung einer Getriebeeingangswelle erfolgt dabei beispielsweise über die Steuerung der Motordrehzahl bei eingerückter Eingangskupplung oder auch über Hilfsantriebe. Zur Abbremsung der Getriebeeingangswellendrehzahl werden häufig Synchronelemente, beispielsweise als Reibkegel oder Reibringe ausgebildete Reibkupplungen, verwendet. Die Synchronelemente müssen diejenige Reibarbeit leisten, die sich aus den Trägheitsmomenten der rotierenden Massen und den reibungsbedingten Schleppmomenten ergibt.

Als problematisch hat sich herausgestellt, dass die Schleppmomente bei Nasskupplungen von Doppelkupplungsgetrieben, insbesondere bei kaltem Getriebeöl, besonders hoch sind, so dass die Synchronelemente entsprechend groß ausgelegt werden müssen, hohem Verschleiß unterliegen, wodurch sich deren Lebensdauer verkürzt, und sich relativ hohe Schaltzeiten ergeben können.

Aus der DE 196 52 916 A1 ist eine Synchronisiervorrichtung für ein automatisiertes Schaltgetriebe bekannt. In einem Gehäuse ist eine Vorgelegewelle angeordnet, die über eine Bremse mit einem Kolben bremsbar ist. Der Kolben ist in einem, mit dem Gehäuse verbundenen Bremsgehäuse, in einem Zylinder verschiebbar gelagert. Durch eine über Ventile im Bremsgehäuse mikroprozessorgesteuerte Druckbeaufschlagung presst der Kolben im Bremsgehäuse, verschiebbar und drehfest gelagerte Lamellen mit sich drehenden Lamellen, die mit der Vorgelegewelle verbunden sind, zusammen gegen eine Anlauffläche am Gehäuse, so dass es zum Reibschluss zwischen den Lamellen kommt und eine Abbremsung der Vorgelegewelle erfolgt. Zur Druckbeaufschlagung und Entlüftung münden zwei getrennte Kanäle in einen Zylinderraum vor dem Kolben, so dass in einem Zuführkanal vor dem zugehörigen Ventil stets ein bestimmter Druck vorgehalten werden kann. Dadurch wird ein besonders schnelles und gleichbleibendes Ansprechverhalten der Bremse erreicht. Die Ansteuerung über den Mikroprozessor sorgt bei einem Hochschaltvorgang für die Abbremsung der Vorgelegewelle bis zur Erreichung einer von einer sensorerfassten Abtriebsdrehzahl einer Abtriebswelle und der vorgewählten Übersetzung des höheren Gangs abhängigen Sollanschlussdrehzahl.

Nachteilig ist, dass die Kolbenbremse und deren Ansteuerung nur die Abbremsung und Synchronisierung der Vorgelegewelle regelt, eine Drehzahlsynchronisierung, insbesondere für ein Doppelkupplungsgetriebe mit mindestens zwei Getriebeeingangswellen, bei denen sequentiell beide Getriebeeingangswellen auf eine Synchrondrehzahl einzustellen sind, kann damit jedoch nicht dargestellt werden.

Aus der DE 196 27 895 C1 ist ein Zahnräderwechselgetriebe mit nichtsynchronisierten Zahnradstufen und einer Doppelbandbremse bekannt. Zwei gegenläufige Bremstrommeln werden von jeweils einem Band umschlungen, wobei die eine Bremstrommel auf einer Getriebeeingangswelle sitzt, und die andere Bremstrommel auf einer parallel zu der Getriebeeingangswelle angeordneten und sich über eine Zahnradstufe in ständiger Antriebsverbindung mit dieser befindenden, Vorgelegewelle sitzt. Die Doppelbandbremse kann durch einen gemeinsamen Aktuator, beispielsweise über einen Hydraulikkolben, durch Zug an den Bändern betätigt werden, um zum Zwecke des Hochschaltens, d.h. damit ein problemloses Einklauen des neuen Ganges ermöglicht wird, ein Verzögerungsmoment zur Verzögerung der Drehzahl der Eingangswelle zu bewirken. Die Bremswirkung kann durch motorseitige Maßnahmen, beispielsweise durch Schließen einer Drosselklappe oder durch Verschiebung des Zündzeitpunkts des Antriebsmotors, unterstützt werden.

Nachteilig wirkt sich aus, das zur Unterstützung der Doppelbandbremse des bekannten Zahnräderwechselgetriebe für eine schnelle und momentfreie Synchronisierung zusätzliche motorseitige Maßnahmen vorgesehen sind. Dies ist relativ aufwendig und setzt bestimmte motorseitige Bauelemente oder Nebenaggregate und ein relativ aufwendige Steuerung der zusätzlichen Maßnahmen voraus. Hingegen ist eine elektronische Schaltablaufsteuerung, wie sie für eine Synchronisierungsvorrichtung für ein Doppelkupplungsgetriebe erforderlich ist, nicht vorgesehen. Weiterhin ist die Doppelbandbremse als trocken laufende Bremse ausgelegt, die in einem Kupplungsgehäuse einer Trennkupplung angeordnet ist. Sie ist daher für den Einsatz für ein Nasskupplungsgetriebe, wie sie bei Doppelkupplungsgetrieben häufig vorkommen, nur mit hohem konstruktivem zusätzlichen Aufwand, mit Unterbringung in einem separaten Gehäuse, einsetzbar.

Aus der FR-A-2805587, welche den nächsten Stand der Technik representiert, ist eine Vorrichtung zur Synchronisierung eines Doppelkupplungsgetriebes insbesondere für ein Kraftfahrzeug bekannt. Die Vorrichtung ist mit einer Bremseinrichtung zur Synchronisierung der Drehzahl der schaltenden Getriebeteile bei einem Gangwechsel von einem niedrigen Quellgang in einen höheren Zielgang versehen. Die Bremseinrichtung besteht aus einer Getriebeeingangswellenbremse, die derart über eine Steuereinrichtung ansteuerbar ist, dass über sie die Abbremsung der jeweiligen Getriebeeingangswelle die erforderliche Bremsleistung aufbringt, die erforderlich ist, die Getriebeausgangswelle auf eine zugeordnete Synchrondrehzahl abzubremsen.

Der Abstract der JP 60175845 A offenbart ein Doppelkupplungsgetriebe mit geringer axialer Ausdehnung. Erfindungsgemäß ist eine Mehrzahl von Welle vorgesehen auf deren Losräder für einzelne Gangstufen vorgesehen sind. Des Weiteren ist eine Reibkupplung vorgesehen, die die Eingangswelle direkt mit der Ausgangswelle verbindet und so einen direkten Durchtrieb der Antriebsleistung auf die Abtriebsräder ermöglicht.

Die DE 197 49 767 A1 offenbart ein automatisiertes Schaltgetriebe mit einem hydrodynamischen Anfahrelement. Das Getriebe weist neben der Eingangswelle eine, mit einer Wellenbremse vorgesehenen Vorgelegewelle auf. Die Loszahnräder (der einzelnen Gangstufen werden über Klauenkupplung drehfest mit der Abtriebswelle verbunden. Die Vorgelegewelle ist über eine Wellenbremse abbremsbar. Dadurch ist es möglich Drehzahlgleichheit zwischen Vorgelegewelle 28 und Abtriebswelle herzustellen um die Klauenkupplung zu schalten. Hilfsweise erfolgt hier ein Eingriff in die Motorsteuerung durch ggf. notwendiges Annehmen der Motordrehzahl um die Drehzahlgleichheit herzustellen.

Aufgabe der vorliegenden Erfindung ist es daher, eine Vorrichtung zur Synchronisierung, insbesondere eines Doppelkupplungsgetriebes zu schaffen, bei dem die erforderliche Drehzahlanpassung der Getriebeeingangswellen über unterschiedliche Baugruppen ermöglicht wird.

Die Aufgabe wird erfindungsgemäß in Verbindung mit dem Oberbegriff des Anspruchs 1 dadurch gelöst, dass die Bremseinrichtung je Teilgetriebe des Doppelkupplungsgetriebes mindestens eine einer Getriebeeingangswelle des jeweiligen Teilgetriebes zugehörige Getriebeeingangswellenbremse aufweist, und dass die Getriebeeingangswellenbremsen derart über eine Steuereinrichtung ansteuerbar sind, dass die für eine Abbremsung der jeweiligen Getriebeeingangswelle erforderliche Bremsleistung auf eine, einer jeweiligen Zielgangstufe zugeordnete Synchrondrehzahl, über die jeweilige Getriebeeingangwellenbremse erzeugbar ist.

Durch die Anordnung von zwei Getriebeeingangswellenbremsen, wobei den üblicherweise zwei Teilgetrieben des Doppelkupplungsgetriebes jeweils eine Bremse zugeordnet ist, kann die, bei einem Hochschaltvorgang, zur Synchronisation der jeweiligen Getriebeeingangswelle erforderliche Bremsleistung mit der zugehörigen Bremse erzeugt werden. Die Bremsen sind widerstandsfähiger im Vergleich zu herkömmlichen Synchronelementen ausgebildet. Dadurch wird insgesamt ein geringerer Verschleiß und damit eine höhere Lebensdauer der Synchronisationsvorrichtung des Getriebes erreicht. Zudem kann durch eine Auslegung mit einer vorgebbar hohen Bremsleistung der Bremsen und die entsprechende Ansteuerung durch die Steuereinrichtung die Synchronisationszeit verkürzt werden, was kürzere Schaltzeiten und eine Verbesserung des Schaltkomforts zur Folge hat. Die Getriebeeingangwellenbremsen halten insbesondere auch bei kaltem Getriebeöl den hohen Belastungen zur Einhaltung einer kurzen Schaltzeit stand. Dadurch können im Fahrbetrieb direkt nach einem Kaltstart kurze Schaltzeiten realisiert und im Weiteren beibehalten werden, so dass sich insgesamt gleichbleibend kurze Schaltzeiten ergeben, bei mindestens gleichbleibender oder sogar erhöhter Lebensdauer des Getriebes.

Gemäß einer bevorzugten Ausführungsform der Erfindung ist die Steuereinrichtung ein Getriebesteuergerät.

In automatisierten Getrieben, insbesondere in Doppelkupplungsgetrieben werden üblicherweise Getriebesteuergeräte zur Regelung der Schaltabläufe verwendet. Die Aufgaben der Steuereinrichtung können kostengünstig durch Integration der entsprechenden Funktionen in ein derartiges Getriebesteuergerät übernommen werden.

Erfindungsgemäß sind Synchronelemente zur Synchronisierung der schaltenden Getriebeteile vorgesehen, und sind die Bremsleistungen der Getriebeeingangswellenbremsen und der Synchronelemente über die Steuereinrichtung aufeinander abstimmbar.

Bei Getrieben mit bereits vorhandenen Synchronelementen zur Abbremsung der Zahnradzüge, bzw. Wellen, können zusätzlich die Getriebeeingangswellenbremsen zur Unterstützung und Entlastung eingesetzt werden. Insbesondere müssen die Synchronelemente nicht für die, bei kaltem Getriebe durch die hohen Schleppmomente maximal auftretenden Reibleistungsspitzen bei Hochschaltvorgängen ausgelegt werden, was sich kostengünstig und verschleißmindernd auswirkt. Über die Steuereinrichtung ist eine Feinabstimmung der gesamten Bremseinrichtung zur Optimierung der Schaltzeiten möglich.

Gemäß einer weiteren bevorzugten Ausführungsform der Erfindung sind die Getriebeeingangswellenbremsen in einem Getriebegehäuse des Doppelkupplungsgetriebes integriert.

Der Einbau der Bremsen in das Getriebegehäuse ist konstruktiv relativ einfach und daher kostengünstig sowie platzsparend, wodurch sich eine kompakte Bauform des Getriebes beibehalten lässt.

Nach einer weiteren bevorzugten Ausführungsform der Erfindung sind die Getriebeeingangswellenbremsen auf der, einer Getriebeausgangswelle zugewandten Getriebeseite, angeordnet, und über jeweils eine Getriebeausgangskupplung mit der Getriebeausgangswelle koppelbar.

Durch die Kopplung der Bremsen mit der Getriebeausgangswelle, kann die Abbremsung über Ausgangswelle erfolgen. Die Ausnutzung des Drehmoments der Getriebeausgangswelle wirkt sich dabei günstig auf den Energieverbrauch der Bremsen aus.

Gemäß weiteren bevorzugten Ausführungsformen der Erfindung, die in den Unteransprüchen 6 bis 8 beschrieben sind, sind die Getriebeeingangswellenbremsen als Reibbremsen mit jeweils zwei reibschlüssig verbindbaren Reibpartnem ausgebildet. Bremsen mit Reibpartnem haben sich für den Einsatz in Kraftfahrzeugen bewährt. Dabei kann jeweils der eine Reibpartner mit der Getriebeeingangswelle und der andere Reibpartner mit dem Getriebegehäuse kraftschlüssig verbunden sein. Beispielsweise ist dabei der eine Reibpartner als Bremsscheibe und der andere, gehäusefeste Reibpartner, als ein oder mehrere Bremssättel ausgebildet. Bei einer Kopplung mit der Getriebeausgangswelle kann der zweite Reibpartner mit der Getriebeausgangswelle kraftschlüssig verbunden sein.

Nach einer weiteren bevorzugten Ausführungsform der Erfindung sind die Getriebeeingangswellenbremsen hydraulisch betätigbar. Sie können auch pneumatisch oder elektrisch bzw. elektromechanisch oder elektromagnetisch betätigbar sein.

Bei Fahrzeugen mit hydraulischer Getriebesteuerung ist eine hydraulische Betätigung der Bremsen insbesondere gegenüber aufwendigen mechanischen Systemen vorteilhaft. Bei Fahrzeugen mit Druckluftversorgung kann eine pneumatische Betätigung kostengünstig eingesetzt werden. Grundsätzlich sind auch andere Bremssysteme, beispielsweise Wirbelstrombremsen, denkbar.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind. Es zeigen
- Figur 1:: eine schematische Darstellung eines Doppelkupplungsgetriebes in einer Seitenansicht im Schnitt mit zwei Getriebeeingangswellenbremsen und
- Figur 2:: die Darstellung aus Fig. 1 zusätzlich mit einer Kopplung der Bremsen mit einer Getriebeausgangswelle.

Eine Vorrichtung zur Synchronisierung eines Doppelkupplungsgetriebes 1 besteht im wesentlichen aus einer Bremseinrichtung 6 mit zwei Getriebeeingangswellenbremsen B1 und B2.

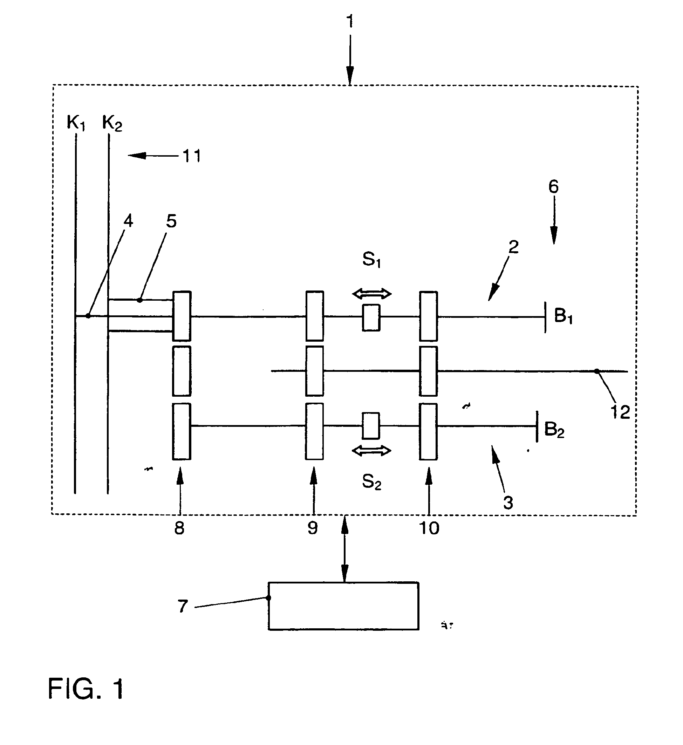

Das Doppelkupplungsgetriebe 1 besteht im wesentlichen aus zwei Teilgetrieben 2 und 3, mit einer, aus zwei Eingangskupplungen K1 und K2 ausgebildeten Doppelkupplung 11. Die Teilgetriebe 2 und 3 sind jeweils über ihre zugehörige Eingangskupplung K1, bzw. K2 mit einem (nicht dargestellten) Antriebsmotor verbindbar, um ein Antriebsmoment über eine jeweilige Gangstufe, d.h. mit einem bestimmten Übersetzungsverhältnis, auf eine Getriebeausgangswelle 12 zu übertragen. Das eine Teilgetriebe 2 bzw. 3 trägt die ungeraden Gangstufen, entsprechend trägt das andere Teilgetriebe 3, bzw. 2 die geraden Gangstufen. Das Doppelkupplungsgetriebe 1 weist zwei koaxial angeordnete Getriebeeingangswellen 4, 5 auf , wobei dem Teilgetriebe 2 die innere Welle 4 und dem Teilgetriebe 3 die äußere Welle 5 zugeordnet ist. Dabei ist das Teilgetriebe 3 über einen Zahnradzug 8 mit seiner Welle 5 gekoppelt. In vereinfachender Weise sind in Fig. 1 die Gangstufen durch Zahnradzüge 9, 10 dargestellt.

Den Gängen sind in bekannter Weise (in den Figuren nicht im Detail dargestellte) Gangschaltkupplungen zugeordnet, die beim Einlegen der Gänge über axiales Verschieben von Schaltstangen mit an diesen befestigten Schaltmuffen jeweils eine Verbindung zwischen einem Losrad und der das Losrad tragenden Welle, d.h. zwischen Zahnradzug und Abtriebswelle 12 herstellen. Die Schaltstangen werden über eine Schaltwelle verstellt, an der Schaltfinger angeordnet sind, die in entsprechende Aussparungen der jeweiligen Schaltstange eingreifen. Die mechanische Betätigung der Schaltwelle erfolgt über einen elektrohydraulischen Gangsteller, der von einer Steuereinrichtung 7, vorteilhaft als Getriebesteuergerät ausgebildet, angesteuert wird.

Den Teilgetrieben 2, bzw. 3 sind verstellbare Synchronelemente S1, bzw. S2 zur Drehzahlsynchronisierung zugeordnet. Die Synchronelemente sind beispielsweise als Reibringe ausgebildet, die bei der axialen Verschiebung der Schaltstangen mit der jeweiligen Schaltmuffe in Kontakt kommt. Dadurch wird bei einem Schaltvorgang die schnellere Welle gegenüber der langsameren abgebremst. Bei Gleichlauf kann ein momentfreies Einlegen des Zielgangs erfolgen. Zur Unterstützung der Synchronisierung ist dem Teilgetriebe 2, bzw. der Getriebeeingangswelle 4, die Getriebeeingangswellenbremse B1, und entsprechend dem Teilgetriebe 3, bzw. der Getriebeeingangswelle 5 die Getriebeeingangswellenbremse B2 zugeordnet. Die Wellenbremsen B1 und B2 sind über die Steuereinrichtung 7 ansteuerbar und können die zur Synchronisierung erforderliche Reibleistung, d.h. Abbremsung der jeweiligen Welle erzeugen. Dadurch werden die Synchronelemente S1, bzw. S2 bei einem Hochschaltvorgang teilweise oder vollständig entlastet.

Die Getriebeeingangsellenbremsen B1, bzw. B2 können in bekannter Bauweise ausgeführt sein, beispielsweise als Scheibenbremsen, bei denen eine Bremsscheibe mit einer Welle und ein Bremssattel mit einem Gehäuse verbunden ist, und wobei über ein hydraulisches Druckmittel eine reibschlüssige Verbindung zwischen Scheibe und Sattel herstellbar ist, um die Bremse zur Wirkung zu bringen.

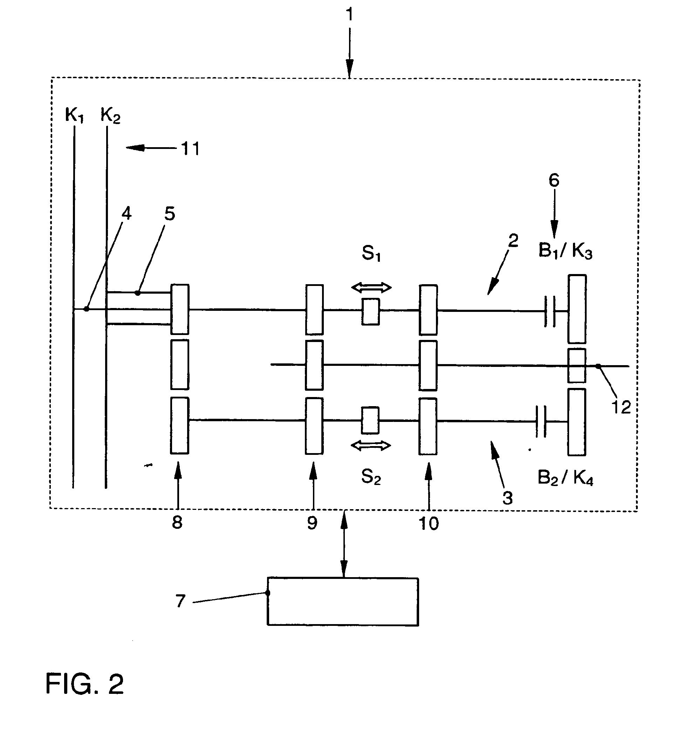

Die Getriebeeingangsellenbremsen B1, bzw. B2 können auch über die Getriebeausgangswelle 12 gekoppelt werden. Dazu sind zwei Ausgangskupplungen K3 und K4 vorgesehen (Fig. 2), die jeweils den Bremsen B1, B2 in Richtung Getriebeausgang nachgelagert sind. Über die Kupplungen sind die Bremsen mit der Ausgangswelle verbindbar. Eine sich langsamer als die Ausgangswelle 12 drehende Eingangswelle 4 oder 5 kann dann mit Hilfe der jeweiligen Kupplung K3, bzw. K4 über die Ausgangswelle 12 abgebremst werden.

Mit Hilfe der Abbremsung der Getriebeeingangswellen 4, 5 über die Getriebeeingangswellenbremsen B1, B2 wird somit eine effektive Unterstützung der Synchronisierung des Doppelkupplungsgetriebes 1 realisiert.

### BEZUGSZEICHENLISTE

- 1: Doppelkupplungsgetriebe
- 2: 1. Teilgetriebe
- 3: 2. Teilgetriebe
- 4: Getriebeeingangswelle für Teilgetriebe 2
- 5: Getriebeeingangswelle für Teilgetriebe 3
- 6: Bremseinrichtung
- 7: Steuereinrichtung
- 8: Zahnradzug (Teilgetriebekopplung)
- 9: Zahnradzug (Gangstufe)
- 10: Zahnradzug (Gangstufe)
- 11: Doppelkupplung
- 12: Getriebeausgangswelle
- K1: Eingangskupplung für Teilgetriebe 2
- K2: Eingangskupplung für Teilgetriebe 3
- K3: Ausgangskupplung für Teilgetriebe 2
- K4: Ausgangskupplung für Teilgetriebe 3
- S1: Synchronelement
- S2: Synchronelement
- B1: Getriebeeingangswellenbremse für Teilgetriebe 2
- B2: Getriebeeingangswellenbremse für Teilgetriebe 3

## Patentansprüche

1. Vorrichtung zur Synchronisierung eines Doppelkupplungsgetriebes (1), insbesondere für ein Kraftfahrzeug, mit einer Bremseinrichtung zur Synchronisierung der Drehzahlen der schaltenden Getriebeteile bei einem Gangwechsel von einem niedrigeren Quellgang in einen höheren Zielgang, **wobei** die Bremseinrichtung (6) je Teilgetriebe (2, 3) des Doppelkupplungsgetriebes (1) mindestens eine, einer Getriebeeingangswelle (4, 5) des jeweiligen Teilgetriebes (2, 3) zugehörige, Getriebeeingangswellenbremse (B1, B2) aufweist, und dass die Getriebeeingangswellenbremsen (B1, B2) derart über eine Steuereinrichtung (7) ansteuerbar sind, dass die für eine Abbremsung der jeweiligen Getriebeeingangswelle (4, 5) erforderliche Bremsleistung auf eine, einer jeweiligen Zielgangstufe zugeordnete Synchrondrehzahl, über die jeweilige Getriebeeingangwellenbremse (B1, B2) erzeugbar ist, **dadurch gekennzeichnet, dass** Synchronelemente (S1, S2) zur Synchronisierung der schaltenden Getriebeteile vorgesehen sind, und dass über die Steuereinrichtung (7) die Bremsleistungen der Getriebeeingangswellenbremsen (B1, B2) und der Synchronelemente (S1, S2) aufeinander abstimmbar sind.

2. Vorrichtung nach Anspruch 1, **dadurch gekennzeichnet, dass** die Steuereinrichtung (7) ein Getriebesteuergerät ist.

3. Vorrichtung nach einem der Ansprüche 1 bis 2, **dadurch gekennzeichnet, dass** die Getriebeeingangswellenbremsen (B1, B2) in einem Getriebegehäuse des Doppelkupplungsgetriebes (1) integriert sind.

4. Vorrichtung nach einem der Ansprüche 1 bis 3, **dadurch gekennzeichnet, dass** die Getriebeeingangswellenbremsen (B1, B2) auf der einer Getriebeausgangswelle (12) zugewandten Getriebeseite angeordnet sind, und dass die Getriebeeingangswellenbremsen (B1, B2) über jeweils eine Getriebeausgangskupplung (K3, K4) mit der Getriebeausgangswelle (12) koppelbar sind.

5. Vorrichtung nach einem der Ansprüche 1 bis 4, **dadurch gekennzeichnet, dass** die Getriebeeingangswellenbremsen (B1, B2) als Reibbremsen mit jeweils zwei reibschlüssig verbindbaren Reibpartnern ausgebildet sind.

6. Vorrichtung nach Anspruch 5, **dadurch gekennzeichnet, dass** jeweils der eine Reibpartner mit der Getriebeeingangswelle (4, 5) und der andere Reibpartner mit dem Getriebegehäuse kraftschlüssig verbunden ist.

7. Vorrichtung nach den Ansprüchen 5 und 6, **dadurch gekennzeichnet, dass** jeweils der eine Reibpartner mit der Getriebeeingangswelle (4, 5) und der andere Reibpartner mit der Getriebeausgangswelle (12) kraftschlüssig verbunden ist.

8. Vorrichtung nach einem der Ansprüche 1 bis 7, **dadurch gekennzeichnet, dass** die Getriebeeingangswellenbremsen (B1, B2) hydraulisch betätigbar sind.

9. Vorrichtung nach einem der Ansprüche 1 bis 7, **dadurch gekennzeichnet, dass** die Getriebeeingangswellenbremsen (B1, B2) pneumatisch betätigbar sind.

10. Vorrichtung nach einem der Ansprüche 1 bis 7, **dadurch gekennzeichnet, dass** die Getriebeeingangswellenbremsen (B1, B2) elektromechanisch betätigbar sind.

11. Vorrichtung nach einem der Ansprüche 1 bis 7, **dadurch gekennzeichnet, dass** die Getriebeeingangswellenbremsen (B1, B2) elektromagnetisch betätigbar sind.

## Claims

1. Device for synchronizing a double clutch transmission (1), in particular for a motor vehicle, having a brake device for synchronizing the rotational speeds of the transmission parts being shifted during a gear change from a relatively low source gear to a relatively high target gear, the brake device (6) having, for each component transmission (2, 3) of the double clutch transmission (1), at least one transmission input shaft brake (B1, B2) assigned to a transmission input shaft (4, 5) of the respective component transmission (2, 3), and in that the transmission input shaft brakes (B1, B2) can be activated by means of a control device (7) in such a way that the braking power required for braking the respective transmission input shaft (4, 5) to a synchronous rotational speed associated with a respective target gear stage can be generated by means of the respective transmission input shaft brake (B1, B2), **characterized in that** synchronizing elements (S1, S2) are provided for synchronizing the transmission parts being shifted, and **in that** the braking powers of the transmission input shaft brakes (B1, B2) and of the synchronizing elements (S1, S2) can be coordinated with one another by means of the control device (7).

2. Device according to Claim 1, **characterized in that** the control device (7) is a transmission control unit.

3. Device according to one of Claims 1 to 2, **characterized in that** the transmission input shaft brakes (B1, B2) are integrated in a transmission housing of the double clutch transmission (1).

4. Device according to one of Claims 1 to 3, **characterized in that** the transmission input shaft brakes (B1, B2) are arranged on that side of the transmission which faces towards a transmission output shaft (12), and **in that** the transmission input shaft brakes (B1, B2) can be coupled to the transmission output shaft (12) by means of in each case one transmission output clutch (K3, K4).

5. Device according to one of Claims 1 to 4, **characterized in that** the transmission input shaft brakes (B1, B2) are formed as friction brakes with in each case two friction partners which can be connected in a frictionally engaging manner.

6. Device according to Claim 5, **characterized in that** in each case one friction partner is connected in a non-positively locking manner to the transmission input shaft (4, 5) and the other friction partner is connected in a non-positively locking manner to the transmission housing.

7. Device according to Claims 5 and 6, **characterized in that** in each case one friction partner is connected in a non-positively locking manner to the transmission input shaft (4, 5) and the other friction partner is connected in a non-positively locking manner to the transmission output shaft (12).

8. Device according to one of Claims 1 to 7, **characterized in that** the transmission input shaft brakes (B1, B2) can be hydraulically actuated.

9. Device according to one of Claims 1 to 7, **characterized in that** the transmission input shaft brakes (B1, B2) can be pneumatically actuated.

10. Device according to one of Claims 1 to 7, **characterized in that** the transmission input shaft brakes (B1, B2) can be electromechanically actuated.

11. Device according to one of Claims 1 to 7, **characterized in that** the transmission input shaft brakes (B1, B2) can be electromagnetically actuated.

## Revendications

1. Dispositif de synchronisation d'une boîte de vitesse à double embrayage (1), en particulier pour un véhicule automobile, comprenant un système de freinage pour synchroniser les vitesses de rotation des pièces de la boîte de vitesse à commuter en cas de changement de vitesse d'une vitesse initiale inférieure à une vitesse cible plus élevée, le système de freinage (6) présentant, pour chaque boîte de vitesse partielle (2, 3) de la boîte de vitesse à double embrayage (1), au moins un frein d'arbre d'entrée de boîte de vitesse (B1, B2) associé à un arbre d'entrée de boîte de vitesse (4, 5) de la boîte de vitesse partielle respective (2, 3), et les freins d'arbre d'entrée de boîte de vitesse (B1, B2) pouvant être commandés par le biais d'un système de commande (7) dé telle sorte que la puissance de freinage requise pour un freinage de l'arbre d'entrée de boîte de vitesse respectif (4, 5) puisse être produite par le biais du frein d'arbre d'entrée de boîte de vitesse respectif (B1, B2) à un régime synchrone associé à un étage de vitesse cible respectif, **caractérisé en ce que** des éléments de synchronisation (S1, S2) pour la synchronisation des pièces de la boîte de vitesse à commuter sont prévus, et **en ce que** le système de commande (7) permet d'adapter les unes aux autres les puissances de freinage des freins d'arbre d'entrée de boîte de vitesse (B1, B2) et des éléments de synchronisation (S1, S2).

2. Dispositif selon la revendication 1, **caractérisé en ce que** le système de commande (7) est un appareil de commande de boîte de vitesse.

3. Dispositif selon l'une quelconque des revendications 1 à 2, **caractérisé en ce que** les freins d'arbre d'entrée de boîte de vitesse (B1, B2) sont intégrés dans un carter de boîte de vitesse de la boîte de vitesse à double embrayage (1).

4. Dispositif selon l'une quelconque des revendications 1 à 3, **caractérisé en ce que** les freins d'arbre d'entrée de boîte de vitesse (B1, B2) sont disposés du côté de la boîte de vitesse tourné vers un arbre de sortie de boîte de vitesse (12), et **en ce que** les freins d'arbre d'entrée de boîte de vitesse (B1, B2) peuvent être accouplés à l'arbre de sortie de boîte de vitesse (12) par le biais d'un embrayage de sortie de boîte de vitesse respectif (K3, K4).

5. Dispositif selon l'une quelconque des revendications 1 à 4, **caractérisé en ce que** les freins d'arbre d'entrée de boîte de vitesse (B1, B2) sont réalisés sous forme de freins à friction avec deux partenaires de friction pouvant à chaque fois être connectés par engagement par friction.

6. Dispositif selon la revendication 5, **caractérisé en ce que** l'un des partenaires de friction est à chaque fois connecté par engagement par force à l'arbre d'entrée de boîte de vitesse (4, 5) et l'autre partenaire de friction est connecté par engagement par force au carter de boîte de vitesse.

7. Dispositif selon les revendications 5 et 6, **caractérisé en ce qu'**à chaque fois l'un des partenaires de friction est connecté par engagement par force à l'arbre d'entrée de la boîte de vitesse (4, 5) et l'autre partenaire de friction est connecté par engagement par force à l'arbre de sortie de boîte de vitesse (12).

8. Dispositif selon l'une quelconque des revendications 1 à 7, **caractérisé en ce que** les freins d'arbre d'entrée de boîte de vitesse (B1, B2) peuvent être commandés hydrauliquement.

9. Dispositif selon l'une quelconque des revendications 1 à 7, **caractérisé en ce que** les freins d'arbre d'entrée de boîte de vitesse (B1, B2) peuvent être commandés pneumatiquement.

10. Dispositif selon l'une quelconque des revendications 1 à 7, **caractérisé en ce que** les freins d'arbre d'entrée de boîte de vitesse (B1, B2) peuvent être commandés électromécaniquement.

11. Dispositif selon l'une quelconque des revendications 1 à 7, **caractérisé en ce que** les freins d'arbre d'entrée de boîte de vitesse (B1, B2) peuvent être commandés électromagnétiquement.
